# EUROPEAN PATENT SPECIFICATION

(11) **EP 3 313 022 B1**
(45) Date of publication and mention of the grant of the patent: **01.04.2020**
(21) Application number: 16810947.8
(22) Date of filing: 08.06.2016
(51) Int. Cl.: H04L 12/24, H04L 29/08, H04L 29/12, G06F 16/955, H04L 29/06

(54) **RESENDING METHOD AND DEVICE FOR HYPERTEXT TRANSFER REQUEST, AND CLIENT**
VERFAHREN UND VORRICHTUNG ZUM ERNEUTEN SENDEN EINER HYPERTEXTTRANSFERANFRAGE UND CLIENT
PROCÉDÉ ET DISPOSITIF DE RENVOI D'UNE DEMANDE DE TRANSFERT HYPERTEXTE, ET CLIENT

(30) Priority: 16.06.2015 CN 201510335208
(43) Date of publication of application: 25.04.2018
(73) Proprietor: Alibaba Group Holding Limited, Grand Cayman (KY)
(72) Inventor: TIAN, Liang, Hangzhou 310099 (CN)
(74) Representative: Conroy, John
(86) International application number: PCT/CN2016/085215
(87) International publication number: WO 2016/202206

(56) References cited:
- EP-A1- 2 788 900
- WO-A1-2008/112877
- CN-A- 101 075 908
- CN-A- 101 079 768
- CN-A- 101 388 768
- US-A1- 2002 062 369
- US-A1- 2008 209 030

## Description

### Technical Field

The present application relates to the technical field of browsers and similar containers, and in particular, to a resending method and device for a Hypertext Transfer Protocol request and a client terminal.

### Background Art

A Hypertext transfer protocol (HTTP) request is a way of recording monitoring data of a client terminal to a server terminal. When a user performs an operation on a current web page on a client terminal, for example, clicking a link on the web page or logging in to an account on the web page, the client terminal will monitor the operation and send monitoring data to a server through an HTTP request.

In an actual application, when web page redirection occurs on the client terminal, for example, redirection from a first web page to a second web page, the client terminal will offload the content of the first web page and load the content of the second web page. During the process that the client terminal offloads the first web page, if an HTTP request sent in a first web page state fails to be sent or has not yet been completely sent, the HTTP request may quite possibly be cancelled, and thus the server terminal cannot receive monitoring data carried in the HTTP request, thereby resulting in data loss.

WO 2008/112877 A1 discloses methods and apparatuses to separate the hardware functionality of an input device from an application.

US 2008/209030 A1 discloses methods for mining web logs to debug wide-area connectivity problems. Internet service providers and their clients communicate by transmitting messages across one or more networks and infrastructure components. At various points between the service provider and the clients, inclusively, records may be created of each messages occurrence and status. These records may be read and analyzed to determine the effects of the networks and infrastructure components on the provided quality of service. User-effecting incidents (e.g., failures) occurring at networks may also be identified and described.

### Summary of the Invention

The present invention is defined by the claims.

The present application provides a resending method and device for a Hypertext Transfer Protocol request and a client terminal, such that an HTTP request that fails to be sent due to web page redirection can be resent, thereby solving the problem in the prior art.

In a first aspect of an embodiment of the present application, a method for resending a Hypertext Transfer Protocol request is provided, which includes:
sending, by a client terminal, a Hypertext Transfer Protocol HTTP request to a server, and recording information of the HTTP request, wherein the HTTP request comprises data representing an operation performed by a user on a first web page and wherein information of the HTTP request comprises one or more of: a request method, a Uniform Resource Locator address, or a HTTP protocol version; recording HTTP requests for which response information returned by the server and indicating that the HTTP request was sent successfully is not received, wherein recording the HTTP requests comprises: when the client terminal sends an HTTP request, recording the HTTP request in a list of requests that fail to be sent; and deleting the HTTP request from the list of requests that fail to be sent when response information returned by the server and indicating that the HTTP request was sent successfully is received; when redirection from the first web page to a second web page needs to occur, determining whether the list of requests that fail to be sent includes an HTTP request that failed to be sent when the first web page was open at the client terminal; if it is determined that the list of requests that fail to be sent includes an HTTP request that failed to be sent when the first web page was open at the client terminal, identifying recorded information of the HTTP request that failed to be sent; transferring, to the second web page, the identified recorded information of the HTTP request that failed to be sent; and after redirection to the second web page, resending the HTTP request that failed to be sent according to the identified recorded information of the HTTP request that failed to be sent.

In a second aspect of an embodiment of the present application, a resending device for a Hypertext Transfer Protocol request is provided, which includes: a first sending unit configured to send a Hypertext Transfer Protocol HTTP request to a server, wherein the HTTP request comprises data representing an operation performed by a user on a first web page; a first recording unit configured to record information of the HTTP request, wherein information of the HTTP request comprises one or more of: a request method, a Uniform Resource Locator address, or a HTTP protocol version; a second recording unit configured to record HTTP requests for which response information returned by the server and indicating that the HTTP request was sent successfully is not received, wherein recording the HTTP requests comprises: when the client terminal sends an HTTP request, recording the HTTP request in a list of requests that fail to be sent; and deleting the HTTP request from the list of requests that fail to be sent when response information returned by the server and indicating that the HTTP request was sent successfully is received; an acquisition unit (402) configured to: when redirection from the first web page to a second web page needs to occur, determine whether the list of requests that fail to be sent includes an HTTP request that failed to be sent when the first web page was open at the client terminal; and if it is determined that the list of requests that fail to be sent includes an HTTP request that failed to be sent when the first web page was open at the client terminal, identify recorded information of the HTTP request that failed to be sent; a transferring unit configured to transfer, to the second web page, the identified recorded information of the HTTP request that failed to be sent; and a second sending unit configured to, after redirection to the second web page, resend the HTTP request that failed to be sent according to the identified recorded information of the HTTP request that failed to be sent.

In a third aspect of an embodiment of the present application, a client terminal is provided, which includes:
a processor; and a memory configured to store executable instructions of the processor,
where the processor is configured to:
   send a Hypertext Transfer Protocol HTTP request to a server, and record information of the HTTP request;
   if it is determined that an HTTP request that fails to be sent exists in a first web page state when redirection from the first web page to a second web page needs to occur, acquire information of the HTTP request that fails to be sent;
   transfer, to the second web page, the information of the HTTP request that fails to be sent; and
   after redirection to the second web page, resend the HTTP request that fails to be sent according to the information of the HTTP request that fails to be sent.

In the embodiment of the present application, when sending an HTTP request to the server, the client terminal records information of the HTTP request; when redirection from a first web page to a second web page needs to occur, the client terminal determines whether an HTTP request that fails to be sent exists in a first web page state; if yes, the client terminal acquires information of all the HTTP requests that fail to be sent, and transfers the information to the second web page, such that after redirection to the second web page, the client terminal can resend the HTTP requests that fail to be sent according to the transferred information of the HTTP requests that fail to be sent in the first web page state, thereby avoiding data loss on the server terminal and solving the problem in the prior art.

### Brief Description of the Drawings

FIG. 1 is a flowchart of a resending method for a Hypertext Transfer Protocol request according to an embodiment of the present application;
FIG. 2 is a flowchart of a resending method for a Hypertext Transfer Protocol request according to another embodiment of the present application;
FIG. 3 is a hardware structure diagram of an apparatus provided with a resending device for a Hypertext Transfer Protocol request according to the present application; and
FIG. 4 is a block diagram of a resending device for a Hypertext Transfer Protocol request according to an embodiment of the present application.

### Detailed Description

Exemplary embodiments will be described in detail herein, and examples thereof are shown in the accompanying drawings. In the following description involving the accompanying drawings, the same numerals in different accompanying drawings denote the same or similar elements, unless specified otherwise. Implementations described in the following exemplary embodiments do not represent all implementations consistent with the present application. In contrast, they are merely examples of devices and methods consistent with some aspects of the present application described in detail in the appended claims.

Terms used in the present application are merely used for describing specific embodiments, instead of limiting the present application. Singular forms "a(n)", "said", and "the" used in the present application and the appended claims also include plural forms, unless clearly specified in the context that other meanings are denoted. It should be further understood that the term "and/or" used in this text refers to and includes any or all possible combinations of one or more associated items listed.

It should be understood that although terms such as "first", "second", and "third" may be used to describe various kinds of information in the present application, these kinds of information should not be limited to the terms. These terms are merely used to distinguish information of the same type from each other. For example, without departing from the scope of the present application, the first information may also be referred to as the second information, and similarly, the second information may also be referred to as the first information. Depending on the context, the word "if' used herein may be explained as "when...", "as...", or "in response to determination".

HTTP is an application-layer protocol in a Transmission Control Protocol/Internet Protocol (TCP/IP) model. When a browser and a server need to communicate with each other, a TCP connection is established first, and the browser sends request information to the server.

Specifically, when a user performs an operation on a current web page on a client terminal, for example, clicking a link on the web page or logging in to an account on the web page, the client terminal will monitor the operation and send corresponding HTTP request information to a server for recording.

The server returns corresponding response information after receiving the HTTP request information. If the client terminal receives normal response information returned by the server, it indicates that the HTTP request is sent successfully. If the client terminal receives abnormal response information returned by the server or does not receive response information returned by the server, it indicates that the HTTP request fails to be sent. The reason why the HTTP request fails to be sent may be that the request is cancelled by a browser before being completely sent, and the server does not receive the HTTP request at all, resulting in data loss.

An embodiment of the present application provides a resending method for a Hypertext Transfer Protocol request. The method can record information of all the HTTP requests that fail to be sent before web page redirection, and transfer the information to a next web page after redirection, such that after redirection to the next web page, the client terminal can resend the HTTP requests that fail to be sent according to the information, thereby solving the problem of data loss on the server terminal.

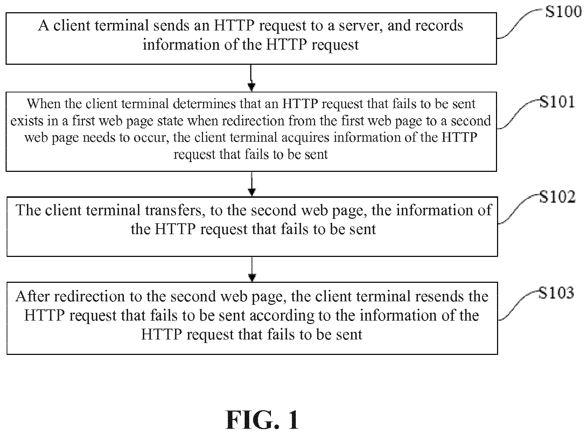

FIG. 1 is a flowchart of a resending method for a Hypertext Transfer Protocol request according to an embodiment of the present application. As shown in FIG. 1, the method may include the following steps:
Step S100: A client terminal sends an HTTP request to a server, and records information of the HTTP request.
Step S101: When the client terminal determines that an HTTP request that fails to be sent exists in a first web page state when redirection from the first web page to a second web page needs to occur, the client terminal acquires information of the HTTP request that fails to be sent.
Step S102: The client terminal transfers, to the second web page, the information of the HTTP request that fails to be sent.
Step S103: After redirection to the second web page, the client terminal resends the HTTP request that fails to be sent according to the information of the HTTP request that fails to be sent.

In the embodiment of the present application, when sending an HTTP request to the server, the client terminal records information of the HTTP request; when redirection from a first web page to a second web page needs to occur, the client terminal determines whether an HTTP request that fails to be sent exists in a first web page state; if yes, the client terminal acquires information of all the HTTP requests that fail to be sent, and transfers the information to the second web page, such that after redirection to the second web page, the client terminal can resend the HTTP requests that fail to be sent according to the transferred information of the HTTP requests that fail to be sent in the first web page state, thereby avoiding data loss on the server terminal and solving the problem in the prior art.

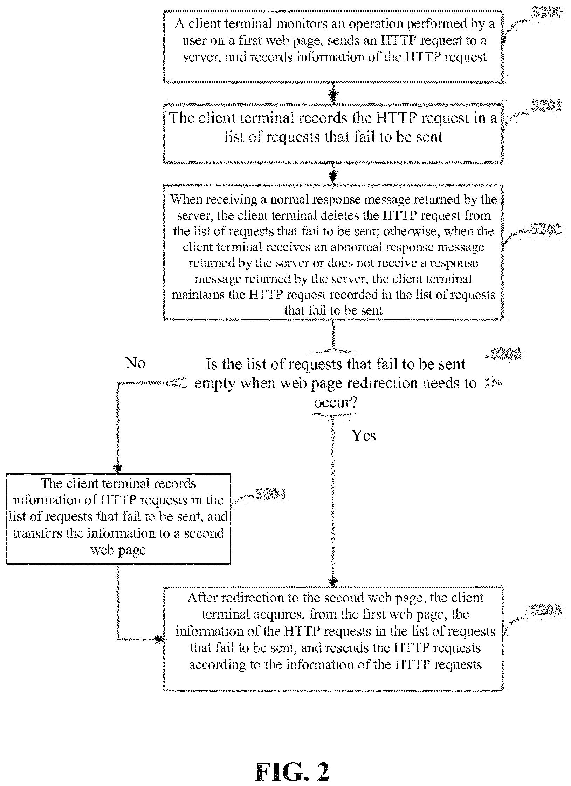

FIG. 2 is a flowchart of a resending method for a Hypertext Transfer Protocol request according to another embodiment of the present application. As shown in FIG. 2, the method may include the following steps:
Step S200: A client terminal monitors an operation performed by a user on a first web page, sends an HTTP request to a server, and records information of the HTTP request.

The HTTP request carries monitoring data of the operation on the first web page.

The first web page here may refer to a web page currently opened by the client terminal. When a user performs an operation on the first web page on the client terminal, for example, clicking a link on the first web page or logging in to an account on the first web page, the client terminal will monitor the operation and send monitoring data to the server terminal in the form of an HTTP request.

It should be noted that in the embodiment of the present application, when sending an HTTP request, the client terminal records complete information of the HTTP request, including a request method, a Uniform Resource Locator (URL) address, the HTTP protocol version and the like, such that after determining that the HTTP request fails to be sent, the client terminal can resend the HTTP request according to the recorded complete information of the HTTP request, thereby avoiding data loss on the server terminal.

Step S201: The client terminal records the HTTP request in a list of requests that fail to be sent.

In the embodiment of the present application, when sending an HTTP request to the server, the client terminal writes information of the HTTP request into a list of requests that fail to be sent. The list of requests that fail to be sent is stored in the client terminal.

Step S202: When receiving a normal response message returned by the server, the client terminal deletes the HTTP request from the list of requests that fail to be sent; otherwise, when the client terminal receives an abnormal response message returned by the server or does not receive a response message returned by the server, the client terminal maintains the HTTP request recorded in the list of requests that fail to be sent.

Specifically, in general cases, the following situations exist when the server returns a response message for an HTTP request sent by the client terminal:
The status code of the response message is 200, and the message is a normal response message, indicating that the HTTP request is sent successfully; the status code of the response message is not 200, and the message is an abnormal response message, indicating that the HTTP request fails to be sent; no response message is received, which may be caused by the fact that web page redirection occurs before the HTTP request is completely sent, such that the HTTP request is directly cancelled by the client terminal, the server terminal does not receive the HTTP request at all, and this situation indicates that the HTTP request fails to be sent.

To ensure data integrity on the server terminal, data needs to be resent for the HTTP request that fails to be sent in any of the above situations. Therefore, when determining that the HTTP request fails to be sent, the client terminal maintains related information of the HTTP request in the list of requests that fail to be sent, such that on a web page which is subsequently redirected to, the client terminal can resend the HTTP requests that fail to be sent according to records in the list of requests that fail to be sent.

Step S203: When detecting that a current web page needs to be redirected from a first web page to a second web page, the client terminal judges whether the list of requests that fail to be sent is empty, if yes, Step S205 is directly performed; and if not, Step S204 is performed.

Step S204: The client terminal records information of HTTP requests in the list of requests that fail to be sent, and transfers the information to the second web page; Step S205 is performed.

In an actual application, when web page redirection occurs on the client terminal, for example, redirection from a first web page to a second web page, the client terminal will offload the content of the first web page and load the content of the second web page. During the process that the client terminal offloads the first web page, if an HTTP request sent in a first web page state fails to be sent or has not been completely sent, the HTTP request may quite possibly be cancelled, and the server terminal cannot receive monitoring data carried in the HTTP request, resulting in data loss.

In the embodiment of the present application, when detecting that a current web page needs to be redirected, for example, from a first web page to a second web page, the client terminal checks the list of requests that fail to be sent before web page redirection to determine whether the list of requests is empty.

If the list of requests is empty, it indicates that all the HTTP requests sent in the first web page state are sent successfully, the phenomenon of data loss does not exist on the server terminal, data does not need to be resent, and redirection to the second web page can be directly performed.

If the list of requests is not empty, it indicates that the HTTP requests included in the list of requests fail to be sent or may not be completely sent in the first web page state, and the server may not receive the monitoring data carried in the HTTP requests. To prevent data loss, the client terminal transfers information of the HTTP requests included in the list of requests to the second web page, such that after redirection to the second web page, the client terminal can resend the HTTP requests according to the information of the HTTP requests.

It should be noted that in the embodiment of the present application, the list of requests that fail to be sent records complete information of all the HTTP requests that fail to be sent, thereby ensuring that the HTTP requests are resent successfully.

Further, in the embodiment of the present application, the step of recording, by the client terminal, information of HTTP requests in the list of requests that fail to be sent, and transferring the information to the second web page may include: recording, by the client terminal, information of HTTP requests in the list of requests that fail to be sent, and writing the information in a window name corresponding to the second web page.

If the redirection from the first web page to the second web page is redirection in a same window, for example, an operation of clicking "opening a link on a new tab page" by a user or performing a login operation by a user after submitting an account and a password on the first web page, the window name corresponding to the second web page is identical to the window name corresponding to the first web page, that is, the name of the window currently opened by the client terminal. At this time, only the information of the HTTP requests in the list of requests that fail to be sent needs to be written in the name of the currently opened window.

If the redirection from the first web page to the second web page is redirection between different windows, for example, an operation of clicking "opening a link in a new window" by a user, the window name corresponding to the second web page is different from the window name corresponding to the first web page. At this time, the client terminal acquires, according to a redirection instruction, the window name corresponding to the second web page, that is, the name of the window to be redirected to, and writes the information of the HTTP requests in the list of requests that fail to be sent in the name of the window to be redirected to.

Step S205: After redirection to the second web page, the client terminal acquires, from the first web page, the information of the HTTP requests in the list of requests that fail to be sent, and resends the HTTP requests according to the information of the HTTP requests.

In the embodiment of the present application, in Step S204, the information of the HTTP requests in the list of requests that fail to be sent has been written in the window name corresponding to the second web page. When web page redirection is completed on the client terminal, that is, redirection to the second web page has been performed, the client terminal can acquire, from the window name corresponding to the second web page, the information of the HTTP requests, corresponding to the first web page, in the list of requests that fail to be sent. The information of the HTTP requests is the information of all the HTTP requests that fail to be sent on the first web page, that is, the information of the HTTP requests from which the server does not receive the monitoring data in the first web page state. The client terminal can resend the HTTP requests that fail to be sent in the first web page state according to the information of the HTTP requests, thereby ensuring integrity of data received by the server terminal and solving the problem in the prior art.

In the embodiment of the present application shown in FIG. 2, an HTTP request is recorded in a list of requests that fail to be sent. When receiving a normal response message returned by the server, the client terminal deletes the HTTP request from the list of requests that fail to be sent; otherwise, when the client terminal receives an abnormal response message returned by the server or does not receive a response message returned by the server, the client terminal maintains the HTTP request recorded in the list of requests that fail to be sent; when detecting that a current web page needs to be redirected from a first web page to a second web page, the client terminal determines whether an HTTP request that fails to be sent exists in a first web page state by judging whether the list of requests that fail to be sent is empty; if the list of requests that fail to be sent is not empty, the client terminal transfers, to the second web page, information of all the HTTP requests in the list of requests that fail to be sent, such that the client terminal can resend the HTTP requests that fail to be sent in the first web page state according to the information of the HTTP requests transferred to the second web page.

In another embodiment of the present application, an HTTP request may also be recorded in an HTTP request cache pool. When receiving a normal response message returned by the server, the client terminal deletes the HTTP request from the HTTP request cache pool; otherwise, when the client terminal receives an abnormal response message returned by the server or does not receive a response message returned by the server, the client terminal maintains the HTTP request recorded in the HTTP request cache pool; when detecting that a current web page needs to be redirected from a first web page to a second web page, the client terminal determines whether an HTTP request that fails to be sent exists in a first web page state by judging whether the HTTP request cache pool is empty; if the HTTP request cache pool is not empty, the client terminal transfers, to the second web page, information of all the HTTP requests in the HTTP request cache pool, such that the client terminal can resend the HTTP requests that fail to be sent in the first web page state according to the information of the HTTP requests transferred to the second web page.

In another embodiment of the present application, an HTTP request may also be recorded in a list of HTTP requests, and the state of the HTTP request is marked as failing to be sent successfully. When receiving a normal response message returned by the server, the client terminal modifies the state of the HTTP request in the list of HTTP requests as being sent successfully; otherwise, when the client terminal receives an abnormal response message returned by the server or does not receive a response message returned by the server, the client terminal maintains the state of the HTTP request in the list of HTTP requests as failing to be sent successfully; when detecting that a current web page needs to be redirected from a first web page to a second web page, the client terminal determines whether an HTTP request that fails to be sent exists in a first web page state by judging whether the HTTP request with its state being marked as failing to be sent successfully exists in the list of HTTP requests; if the HTTP request with its state being marked as failing to be sent successfully exists, the client terminal transfers, to the second web page, information of the HTTP request with its state being marked as failing to be sent successfully, such that the client terminal can resend the HTTP requests that fail to be sent in the first web page state according to the information of the HTTP requests transferred to the second web page.

It should be noted that in the embodiment of the present application, the client terminal can update the list of requests that fail to be sent whenever receiving the normal response information returned by the server terminal, and delete, from the list of requests, the HTTP request corresponding to the normal response information.

Definitely, in an actual application, if the client terminal updates the list of requests whenever receiving the normal response information returned by the server terminal, the client terminal will operate too frequently, and in the embodiment of the present application, when determining to perform web page redirection, the client terminal can initiate checking of request completeness and uniformly update the list of requests. In consideration of the embodiment shown in FIG. 2, when determining to perform web page redirection, the client terminal judges, among all the HTTP requests sent in the current web page state, the specific HTTP requests for which the normal response information returned by the server is received, and deletes, from the list of requests that fail to be sent, the HTTP requests for which the normal response information is received.

Corresponding to the method embodiment of the present application, the present application further provides embodiments of a device and a server.

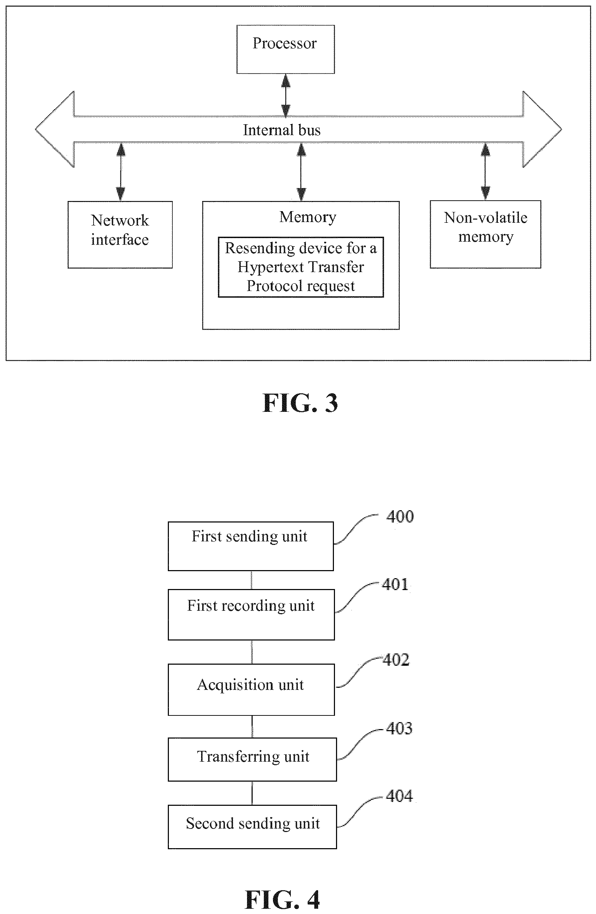

The embodiment of a resending device for a Hypertext Transfer Protocol request according to the present application can be applied in a server. The device embodiment may be implemented by software, hardware, or a combination thereof. Taking software implementation for example, the resending device, as a logical device, is formed in a manner that a processor of an apparatus provided with the resending device reads corresponding computer program instructions in a non-volatile memory into a memory for running therein. From the aspect of hardware, FIG. 3 is a hardware structure diagram of an apparatus provided with a resending device for a Hypertext Transfer Protocol request according to the present application. In addition to the processor, memory, network interface, and non-volatile memory shown in FIG. 3, the apparatus provided with the device in the embodiment may also include other hardware according to the actual functions of the apparatus, for example, as for a client terminal apparatus, the apparatus may include a camera, a touch screen, a communication component and the like; while for a server, the apparatus may include a forwarding chip responsible for processing packets and the like.

FIG. 4 is a block diagram of a resending device for a Hypertext Transfer Protocol request according to an embodiment of the present application. The device can be applied in a server.

The device may include: a first sending unit 400, a first recording unit 401, an acquisition unit 402, a transferring unit 403, and a second sending unit 404.

The first sending unit 400 is configured to send a Hypertext Transfer Protocol HTTP request to a server.

The first recording unit 401 is configured to record information of the HTTP request.

The acquisition unit 402 is configured to, if it is determined that an HTTP request that fails to be sent exists in a first web page state when redirection from the first web page to a second web page needs to occur, acquire information of the HTTP request that fails to be sent.

The transferring unit 403 is configured to transfer, to the second web page, the information of the HTTP request that fails to be sent.

The second sending unit 404 is configured to, after redirection to the second web page, resend the HTTP request that fails to be sent according to the information of the HTTP request that fails to be sent.

The HTTP request that fails to be sent is an HTTP request for which successful response information returned by the server is not received.

The device may further include: a second recording unit.

The second recording unit is configured to record, in the first web page state, all the HTTP requests for which normal response information returned by the server is not received.

The second recording unit may include: a first request recording sub-unit and a first deleting sub-unit.

The first request recording sub-unit is configured to, when an HTTP request is sent, record the HTTP request in a list of requests that fail to be sent.

The first deleting sub-unit is configured to delete the HTTP request from the list of requests that fail to be sent when normal response information returned by the server is received.

The second recording unit may include: a second request recording sub-unit and a second deleting sub-unit.

The second request recording sub-unit is configured to, when an HTTP request is sent, record the HTTP request in an HTTP request cache pool.

The second deleting sub-unit is configured to delete the HTTP request from the HTTP request cache pool when normal response information returned by the server is received.

The transferring unit may include: a writing sub-unit.

The writing sub-unit is configured to write the information of the HTTP request that fails to be sent in a window name corresponding to the second web page.

For the implementation of the functions and effects of each unit in the device, reference may be made to the implementation of the corresponding steps in the method, and the details will not be repeated herein.

The present application further provides a client terminal, including: a processor; and a memory configured to store executable instructions of the processor.

The processor is configured to: send a Hypertext Transfer Protocol HTTP request to a server, and record information of the HTTP request; if it is determined that an HTTP request that fails to be sent exists in a first web page state when redirection from the first web page to a second web page needs to occur, acquire information of the HTTP request that fails to be sent; transfer, to the second web page, the information of the HTTP request that fails to be sent; after redirection to the second web page, resend the HTTP request that fails to be sent according to the information of the HTTP request that fails to be sent.

In the embodiment of the present application, when sending an HTTP request to the server, the client terminal records information of the HTTP request; when redirection from a first web page to a second web page needs to occur, the client terminal determines whether an HTTP request that fails to be sent exists in a first web page state; if yes, the client terminal acquires information of all the HTTP requests that fail to be sent, and transfers the information to the second web page, such that after redirection to the second web page, the client terminal can resend the HTTP requests that fail to be sent according to the transferred information of the HTTP requests that fail to be sent in the first web page state, thereby avoiding data loss on the server terminal and solving the problem in the prior art.

It should be noted that the method and device according to the embodiments of the present application can be applied to a browser or a container similar to a browser, for example, a WebView container generally used in a mobile device.

The device embodiment is basically corresponding to the method embodiment, such that for related parts, reference may be made to the description of the parts in the method embodiment. The device embodiment described above is merely exemplary, where units described as separated parts may be or may not be physically separated, parts displayed as units may be or may not be physical units, and they may be located at the same place or distributed to multiple network units. The objective of the solutions of the present application may be implemented by selecting a part of or all modules of the device according to actual requirements. Those of ordinary skill in the art may understand and implement the present application without creative efforts.

Those skilled in the art can easily obtain other implementations of the present application after considering the specification and practicing the invention disclosed herein. The present application is intended to cover any variations, usages, or adaptive changes of the present application, and these variations, usages, or adaptive changes follow general principles of the present application and include common knowledge or conventional technical means in this technical field that are not disclosed in the present application. The specification and embodiments are considered exemplary, and the scope of the present application are defined by the following
claims.

It should be understood that the present application is not limited to precise structures that have been described above and shown in the accompanying drawings, and can have various modifications and variations without departing from the scope of the present application. The scope of the present application is limited by the appended claims.

## Claims

1. A method for resending a Hypertext Transfer Protocol request, the method comprising:
sending, by a client terminal, a Hypertext Transfer Protocol HTTP request to a server, and recording information of the HTTP request (S100), wherein the HTTP request comprises data representing an operation performed by a user on a first web page and wherein information of the HTTP request comprises one or more of: a request method, a Uniform Resource Locator address, or a HTTP protocol version;
recording HTTP requests for which response information returned by the server and indicating that the HTTP request was sent successfully is not received , wherein recording the HTTP requests comprises:
when the client terminal sends an HTTP request, recording the HTTP request in a list of requests that fail to be sent; and
deleting the HTTP request from the list of requests that fail to be sent when response information returned by the server and indicating that the HTTP request was sent successfully is received;
when redirection from the first web page to a second web page needs to occur, determining whether the list of requests that fail to be sent includes an HTTP request that failed to be sent when the first web page was open at the client terminal;
if it is determined that the list of requests that fail to be sent includes an HTTP request that failed to be sent when the first web page was open at the client terminal, identifying recorded information of the HTTP request that failed to be sent (S101);
transferring, to the second web page, the identified recorded information of the HTTP request that failed to be sent (S102); and
after redirection to the second web page, resending the HTTP request that failed to be sent according to the identified recorded information of the HTTP request that failed to be sent (S103).

2. A method for resending a Hypertext Transfer Protocol request, the method comprising:
sending, by a client terminal, a Hypertext Transfer Protocol HTTP request to a server, and
recording information of the HTTP request (S100), wherein the HTTP request comprises data representing an operation performed by a user on a first web page and wherein information of the HTTP request comprises one or more of: a request method, a Uniform Resource Locator address, or a HTTP protocol version;
recording HTTP requests for which response information returned by the server and indicating that the HTTP request was sent successfully is not received, wherein recording the HTTP requests comprises:
when the client terminal sends an HTTP request, recording the HTTP request in an HTTP request cache pool; and
deleting the HTTP request from the HTTP request cache pool when response information returned by the server and indicating that the HTTP request was sent successfully is received;
when redirection from the first web page to a second web page needs to occur, determining whether the HTTP request cache pool includes an HTTP request that failed to be sent when the first web page was open at the client terminal;
if it is determined that the HTTP request cache pool includes an HTTP request that failed to be sent when the first web page was open at the client terminal,identifying recorded information of the HTTP request that failed to be sent (S101);
transferring, to the second web page, the identified recorded information of the HTTP request that failed to be sent (S102); and
after redirection to the second web page, resending the HTTP request that failed to be sent according to the identified recorded information of the HTTP request that failed to be sent (S103).

3. The method of claim 1 or claim 2, wherein transferring, to the second web page, the identified recorded information of the HTTP request that failed to be sent comprises:
writing the identified recorded information of the HTTP request that failed to be sent in a window name corresponding to the second web page.

4. A device for resending a Hypertext Transfer Protocol request, the device comprising:
a first sending unit (400) configured to send a Hypertext Transfer Protocol HTTP request to a server, wherein the HTTP request comprises data representing an operation performed by a user on a first web page;
a first recording unit (401) configured to record information of the HTTP request, wherein information of the HTTP request comprises one or more of: a request method, a Uniform Resource Locator address, or a HTTP protocol version;
a second recording unit configured to record HTTP requests for which response information returned by the server and indicating that the HTTP request was sent successfully is not received, wherein recording the HTTP requests comprises:
when the client terminal sends an HTTP request, recording the HTTP request in a list of requests that fail to be sent; and
deleting the HTTP request from the list of requests that fail to be sent when response information returned by the server and indicating that the HTTP request was sent successfully is received;
an acquisition unit (402) configured to:
when redirection from the first web page to a second web page needs to occur, determine whether the list of requests that fail to be sent includes an HTTP request that failed to be sent when the first web page was open at the client terminal; and
if it is determined that the list of requests that fail to be sent includes an HTTP request that failed to be sent when the first web page was open at the client terminal, identify recorded information of the HTTP request that failed to be sent;
a transferring unit (403) configured to transfer, to the second web page, the identified recorded information of the HTTP request that failed to be sent; and
a second sending unit (404) configured to, after redirection to the second web page, resend the HTTP request that failed to be sent according to the identified recorded information of the HTTP request that failed to be sent.

5. A device for resending a Hypertext Transfer Protocol request, the device comprising:
a first sending unit (400) configured to send a Hypertext Transfer Protocol HTTP request to a server, wherein the HTTP request comprises data representing an operation performed by a user on a first web page;
a first recording unit (401) configured to record information of the HTTP request, wherein information of the HTTP request comprises one or more of: a request method, a Uniform Resource Locator address, or a HTTP protocol version;
a second recording unit configured to record HTTP requests for which response information returned by the server and indicating that the HTTP request was sent successfully is not received, wherein recording the HTTP requests comprises:
when the client terminal sends an HTTP request, recording the HTTP request in an HTTP request cache pool; and
deleting the HTTP request from the HTTP request cache pool when response information returned by the server and indicating that the HTTP request was sent successfully is received;
an acquisition unit (402) configured to:
when redirection from the first web page to a second web page needs to occur, determine whether the HTTP request cache pool includes an HTTP request that failed to be sent when the first web page was open at the client terminal; and
if it is determined that the HTTP request cache pool includes an HTTP request that failed to be sent when the first web page state was open at the client terminal identify recorded information of the HTTP request that failed to be sent;
a transferring unit (403) configured to transfer, to the second web page, the identified recorded information of the HTTP request that failed to be sent; and
a second sending unit (404) configured to, after redirection to the second web page, resend the HTTP request that failed to be sent according to the identified recorded information of the HTTP request that failed to be sent.

6. The device for resending a Hypertext Transfer Protocol request of claim 4 or claim 5, wherein the transferring unit comprises:
a writing sub-unit configured to write the identified recorded information of the HTTP request that failed to be sent in a window name corresponding to the second web page.

## Patentansprüche

1. Verfahren zum Neusenden einer Hypertext Transfer Protocol-Anforderung, das Verfahren umfassend:
Senden, vonseiten eines Client-Endgeräts, einer Hypertext Transfer Protocol-, HTTP-, Anforderung an einen Server und Aufzeichnen von Informationen der HTTP-Anforderung (S100), wobei die HTTP-Anforderung Daten umfasst, die einen Vorgang darstellen, der von einem Benutzer auf einer ersten Webseite ausgeführt wird, und wobei die Informationen der HTTP-Anforderung eines oder mehrere aus einem Anforderungsverfahren, einer Uniform Resource Locator-Adresse oder einer HTTP-Protokollversion umfasst;
Aufzeichnen von HTTP-Anforderungen für die Antwortinformationen, die vom Server zurückgesendet wurden und angeben, dass die HTTP-Anforderung erfolgreich gesendet wurde, nicht empfangen wurden, wobei das Aufzeichnen der HTTP-Anforderung umfasst:
wenn das Client-Endgerät eine HTTP-Anforderung sendet, Aufzeichnen der HTTP-Anforderung in einer Liste von Anforderungen, die nicht gesendet werden; und
Löschen der HTTP-Anforderung aus der Liste von Anforderungen, die nicht gesendet werden, wenn Antwortinformationen empfangen werden, die vom Server zurückgesendet werden und angeben, dass die HTTP-Anforderung erfolgreich gesendet wurden;
wenn ein Umleiten von der ersten Webseite auf eine zweite Webseite erforderlich ist, Bestimmen ob die Liste von Anforderungen, die nicht gesendet werden, eine HTTP-Anforderung enthält, die nicht gesendet wurde, als die erste Webseite auf dem Client-Endgerät geöffnet war;
wenn festgestellt wird, dass die Liste von Anforderungen, die nicht gesendet wird, eine HTTP-Anforderung enthält, die nicht gesendet wurde, als die erste Webseite auf dem Client-Endgerät geöffnet war, Identifizieren von aufgezeichneten Informationen der HTTP-Anforderung, die nicht gesendet wurde (S101);
Übertragen der identifizierten aufgezeichneten Informationen der HTTP-Anforderung, die nicht gesendet wurde auf die zweite Webseite (S102); und
nach dem Umleiten an die zweite Webseite, erneutes Senden der HTTP-Anforderung, die nicht gesendet wurde, gemäß den identifizierten aufgezeichneten Informationen der HTTP-Anforderung, die nicht gesendet wurde (S103).

2. Verfahren zum Neusenden einer Hypertext Transfer Protocol-Anforderung, das Verfahren umfassend: Senden, vonseiten eines Client-Endgeräts, einer Hypertext Transfer Protocol-, HTTP-, Anforderung an einen Server und Aufzeichnen von Informationen der HTTP-Anforderung (S100), wobei die HTTP-Anforderung Daten umfasst, die einen Vorgang darstellen, der von einem Benutzer auf einer ersten Webseite ausgeführt wird, und wobei die Informationen der HTTP-Anforderung eines oder mehrere aus einem Anforderungsverfahren, einer Uniform Resource Locator-Adresse oder einer HTTP-Protokollversion umfasst;
Aufzeichnen von HTTP-Anforderungen für die Antwortinformationen, die vom Server zurückgesendet wurden und angeben, dass die HTTP-Anforderung erfolgreich gesendet wurde, nicht empfangen wurden, wobei das Aufzeichnen der HTTP-Anforderung umfasst:
wenn das Client-Endgerät eine HTTP-Anforderung sendet, Aufzeichnen der HTTP-Anforderung in einem Cache Pool von HTTP-Anforderungen; und
Löschen der HTTP-Anforderung aus dem Cache Pool von HTTP-Anforderungen, wenn Antwortinformationen empfangen werden, die vom Server zurückgesendet wurden und angeben, dass die HTTP-Anforderung erfolgreich gesendet wurden;
wenn ein Umleiten von der ersten Webseite auf eine zweite Webseite erforderlich ist, Bestimmen ob das Cache Pool von HTTP-Anforderungen eine HTTP-Anforderung enthält, die nicht gesendet wurde, als die erste Webseite auf dem Client-Endgerät geöffnet war;
wenn festgestellt wird, dass das Cache Pool von HTTP-Anforderungen eine HTTP-Anforderung enthält, die nicht gesendet wurde, als die erste Webseite auf dem Client-Endgerät geöffnet war, Identifizieren von aufgezeichneten Informationen der HTTP-Anforderung, die nicht gesendet wurde (S101);
Übertragen der identifizierten aufgezeichneten Informationen der HTTP-Anforderung, die nicht gesendet wurde auf die zweite Webseite (S102); und
nach dem Umleiten an die zweite Webseite, erneutes Senden der HTTP-Anforderung, die nicht gesendet wurde, gemäß den identifizierten aufgezeichneten Informationen der HTTP-Anforderung, die nicht gesendet wurde (S103).

3. Verfahren nach Anspruch 1 oder Anspruch 2, wobei das Übertragen der identifizierten aufgezeichneten Informationen der HTTP-Anforderung, die nicht erfolgreich gesendet wurde, auf die zweite Webseite umfasst:
Schreiben der identifizierten aufgezeichneten Informationen der HTTP-Anforderung, die nicht gesendet wurde, in einen Fensternamen, der der zweiten Webseite entspricht.

4. Vorrichtung zum Neusenden einer Hypertext Transfer Protocol-Anforderung, die Vorrichtung umfassend:
eine erste sendende Einheit (400), die zum Senden einer Hypertext Transfer Protocol-, HTTP-, Anforderung an einem Server konfiguriert ist, wobei die HTTP-Anforderung Daten umfasst, die einen Vorgang darstellen, der von einem Benutzer auf einer ersten Webseite ausgeführt wird;
eine erste Aufzeichnungseinheit (401), die zum Aufzeichnen von Informationen der HTTP-Anforderung konfiguriert ist, wobei die HTTP-Anforderung eine oder mehrere aus einem Anforderungsverfahren, einer Uniform Resource Locator-Adresse oder einer HTTP-Protokollversion umfasst;
eine zweite Aufzeichnungseinheit, die zum Aufzeichnen von HTTP-Anforderungen konfiguriert ist, für die Antwortinformationen, die vom Server zurückgesendet werden und angeben, dass die HTTP-Anforderung erfolgreich gesendet wurde, nicht empfangen wurden, wobei das Aufzeichnen der HTTP-Anforderungen umfasst:
wenn das Client-Endgerät eine HTTP-Anforderung sendet, Aufzeichnen der HTTP-Anforderung in einer Liste von Anforderungen, die nicht gesendet werden; und
Löschen der HTTP-Anforderung aus der Liste von Anforderungen, die nicht gesendet werden, wenn Antwortinformationen empfangen werden, die vom Server zurückgesendet werden und angeben, dass die HTTP-Anforderung erfolgreich gesendet wurden;
eine Aufnahmeeinheit (402), konfiguriert zum:
wenn ein Umleiten von der ersten Webseite auf eine zweite Webseite erforderlich ist, Bestimmen ob die Liste von Anforderungen, die nicht gesendet werden, eine HTTP-Anforderung enthält, die nicht gesendet wurde, als die erste Webseite auf dem Client-Endgerät geöffnet war; und
wenn festgestellt wird, dass die Liste von Anforderungen, die nicht gesendet wird, eine HTTP-Anforderung enthält, die nicht gesendet wurde, als die erste Webseite auf dem Client-Endgerät geöffnet war, Identifizieren von aufgezeichneten Informationen der HTTP-Anforderung, die nicht gesendet wurde;
eine Übertragungseinheit (403), die zum Übertragen der identifizierten aufgezeichneten Informationen der HTTP-Anforderung, die nicht gesendet wurde auf die zweite Webseite konfiguriert ist; und
eine zweite Sendeeinheit (404), die nach dem Umleiten an die zweite Webseite, die HTTP-Anforderung, die nicht erfolgreich gesendet wurde, gemäß den aufgezeichneten Informationen der HTTP-Anforderung, die nicht erfolgreich gesendet wurde, neu sendet.

5. Vorrichtung zum Neusenden einer Hypertext Transfer Protocol-Anforderung, die Vorrichtung umfassend:
eine erste sendende Einheit (400), die zum Senden einer Hypertext Transfer Protocol-, HTTP-, Anforderung an einem Server konfiguriert ist, wobei die HTTP-Anforderung Daten umfasst, die einen Vorgang darstellen, der von einem Benutzer auf einer ersten Webseite ausgeführt wird;
eine erste Aufzeichnungseinheit (401), die zum Aufzeichnen von Informationen der HTTP-Anforderung konfiguriert ist, wobei die HTTP-Anforderung eine oder mehrere aus einem Anforderungsverfahren, einer Uniform Resource Locator-Adresse oder einer HTTP-Protokollversion umfasst;
eine zweite Aufzeichnungseinheit, die zum Aufzeichnen von HTTP-Anforderungen konfiguriert ist, für die Antwortinformationen, die vom Server zurückgesendet werden und angeben, dass die HTTP-Anforderung erfolgreich gesendet wurde, nicht empfangen wurden, wobei das Aufzeichnen der HTTP-Anforderungen umfasst:
wenn das Client-Endgerät eine HTTP-Anforderung sendet, Aufzeichnen der HTTP-Anforderung in einem Cache Pool von HTTP-Anforderungen; und
Löschen der HTTP-Anforderung aus dem Cache Pool von HTTP-Anforderungen, wenn Antwortinformationen empfangen werden, die vom Server zurückgesendet wurden und angeben, dass die HTTP-Anforderung erfolgreich gesendet wurden;
eine Aufnahmeeinheit (402), konfiguriert zum:
wenn ein Umleiten von der ersten Webseite auf eine zweite Webseite erforderlich ist, Bestimmen ob das Cache Pool von HTTP-Anforderungen eine HTTP-Anforderung enthält, die nicht gesendet wurde, als die erste Webseite auf dem Client-Endgerät geöffnet war; und
wenn festgestellt wird, dass das Cache Pool von HTTP-Anforderungen eine HTTP-Anforderung enthält, die nicht gesendet wurde, als der erste Webseitenzustand auf dem Client-Endgerät geöffnet war, Identifizieren von aufgezeichneten Informationen der HTTP-Anforderung, die nicht gesendet wurde;
eine Übertragungseinheit (403), die zum Übertragen der identifizierten aufgezeichneten Informationen der HTTP-Anforderung, die nicht gesendet wurde auf die zweite Webseite konfiguriert ist; und
eine zweite Sendeeinheit (404), die nach dem Umleiten an die zweite Webseite, die HTTP-Anforderung, die nicht erfolgreich gesendet wurde, gemäß den aufgezeichneten Informationen der HTTP-Anforderung, die nicht erfolgreich gesendet wurde, neu sendet.

6. Vorrichtung zum Neusenden einer Hypertext Transfer Protocol-Anforderung nach Anspruch 4 oder Anspruch 5, wobei die Übertragungseinheit umfasst:
eine Schreib-Untereinheit, die zum Schreiben der identifizierten aufgezeichneten Informationen der HTTP-Anforderung, die nicht gesendet wurde, in einen Fensternamen konfiguriert ist, der der zweiten Webseite entspricht.

## Revendications

1. Procédé de renvoi d'une demande de protocole de transfert hypertexte, le procédé comprenant :
l'envoi, par un terminal client, d'une demande de protocole de transfert hypertexte, HTTP, et l'enregistrement d'informations de la demande HTTP (S100), la demande HTTP comprenant des données représentant une opération effectuée par un utilisateur sur une première page Web et des informations de la demande HTTP comprenant l'un ou plusieurs : d'un procédé de demande, d'une adresse de localisateur de ressource uniforme ou une version de protocole HTTP ;
l'enregistrement de demandes HTTP pour lesquelles les informations de réponse retournées par le serveur et indiquant que la demande HTTP a été envoyée avec succès ne sont pas reçues, l'enregistrement des demandes HTTP comprenant :
lorsque le terminal client envoie une demande HTTP, l'enregistrement de la demande HTTP dans une liste de demandes qui ne réussissent pas à être envoyées ; et
la suppression de la demande HTTP de la liste de demandes qui ne réussissent pas à être envoyées lorsque les informations de réponse retournées par le serveur et indiquant que la demande HTTP a été envoyée avec succès sont reçues ;
lorsque la redirection de la première page Web à une seconde page Web doit se produire, le fait de déterminer si la liste de demandes qui ne réussissent pas à être envoyées inclut une demande HTTP qui n'a pas réussi à être envoyée quand la première page Web était ouverte sur le terminal client ;
s'il est déterminé que la liste de demandes qui ne réussissent pas à être envoyées inclut une demande HTTP qui n'a pas réussi à être envoyée quand la première page Web était ouverte sur le terminal client, l'identification d'informations enregistrées de la demande HTTP qui n'a pas réussi à être envoyée (S101) ;
le transfert, vers la seconde page Web, des informations enregistrées identifiées de la demande HTTP qui n'a pas réussi à être envoyée (S102) ; et
après la redirection vers la seconde page Web, le renvoi de la demande HTTP qui n'a pas réussi à être envoyée en fonction des informations enregistrées identifiées de la demande HTTP qui n'a pas réussi à être envoyée (S103).

2. Procédé de renvoi d'une demande de protocole de transfert hypertexte, le procédé comprenant : l'envoi, par un terminal client, d'une demande de protocole de transfert hypertexte, HTTP, et l'enregistrement d'informations de la demande HTTP (S100), la demande HTTP comprenant des données représentant une opération effectuée par un utilisateur sur une première page Web et des informations de la demande HTTP comprenant l'un ou plusieurs :
d'un procédé de demande, d'une adresse de localisateur de ressource uniforme ou une version de protocole HTTP ;
l'enregistrement de demandes HTTP pour lesquelles des informations de réponse retournées par le serveur et indiquant que la demande HTTP a été envoyée avec succès ne sont pas reçues, l'enregistrement des demandes HTTP comprenant :
lorsque le terminal client envoie une demande HTTP, l'enregistrement de la demande HTTP dans une réserve de cache de demande HTTP ; et
la suppression de la demande HTTP de la réserve de cache de demande HTTP lorsque les informations de réponse retournées par le serveur et indiquant que la demande HTTP a été envoyée avec succès sont reçues ;
lorsque la redirection de la première page Web à une seconde page Web doit se produire, le fait de déterminer si la réserve de cache de demande HTTP inclut une demande HTTP qui n'a pas réussi à être envoyée quand la première page Web était ouverte sur le terminal client ;
s'il est déterminé que la réserve de cache de demande HTTP inclut une demande HTTP qui n'a pas réussi à être envoyée quand la première page Web était ouverte sur le terminal client, l'identification d'informations enregistrées de la demande HTTP qui n'a pas réussi à être envoyée (S101) ;
le transfert, vers la seconde page Web, des informations enregistrées identifiées de la demande HTTP qui n'a pas réussi à être envoyée (S102) ; et
après la redirection vers la seconde page Web, le renvoi de la demande HTTP qui n'a pas réussi à être envoyée en fonction des informations enregistrées identifiées de la demande HTTP qui n'a pas réussi à être envoyée (S103).

3. Procédé selon la revendication 1 ou la revendication 2, dans lequel le transfert, vers la seconde page Web, des informations enregistrées identifiées de la demande HTTP qui n'a pas réussi à être envoyée comprend :
l'écriture des informations enregistrées identifiées de la demande HTTP qui n'a pas réussi à être envoyée dans un nom de fenêtre correspondant à la seconde page Web.

4. Dispositif de renvoi d'une demande de protocole de transfert hypertexte, le dispositif comprenant :
une première unité d'envoi (400) configurée pour envoyer une demande de protocole de transfert hypertexte, HTTP, à un serveur, la demande HTTP comprenant des données représentant une opération effectuée par un utilisateur sur une première page Web ;
une première unité d'enregistrement (401) configurée pour enregistrer des informations de la demande HTTP, les informations de la demande HTTP comprenant l'un ou plusieurs : d'un procédé de demande, d'une adresse de localisateur de ressource uniforme ou d'une version de protocole HTTP ;
une seconde unité d'enregistrement configurée pour enregistrer des demandes HTTP pour lesquelles les informations de réponse retournées par le serveur et indiquant que la demande HTTP a été envoyée avec succès ne sont pas reçues, l'enregistrement des demandes HTTP comprenant :
lorsque le terminal client envoie une demande HTTP, l'enregistrement de la demande HTTP dans une liste de demandes qui ne réussissent pas à être envoyées ; et
la suppression de la demande HTTP de la liste de demandes qui ne réussissent pas à être envoyées lorsque les informations de réponse retournées par le serveur et indiquant que la demande HTTP a été envoyée avec succès sont reçues ;
une unité d'acquisition (402) configurée pour :
lorsque la redirection de la première page Web à une seconde page Web doit se produire, déterminer si la liste de demandes qui ne réussissent pas à être envoyées inclut une demande HTTP qui n'a pas réussi à être envoyée quand la première page Web était ouverte sur le terminal client ; et
s'il est déterminé que la liste de demandes qui ne réussissent pas à être envoyées inclut une demande HTTP qui n'a pas réussi à être envoyée quand la première page Web était ouverte sur le terminal client, identifier des informations enregistrées de la demande HTTP qui n'a pas réussi à être envoyée ;
une unité de transfert (403) configurée pour transférer, vers la seconde page Web, les informations enregistrées identifiées de la demande HTTP qui n'a pas réussi à être envoyée ; et
une seconde unité d'envoi (404) configurée pour, après la redirection vers la seconde page Web, renvoyer la demande HTTP qui n'a pas réussi à être envoyée en fonction des informations enregistrées identifiées de la demande HTTP qui n'a pas réussi à être envoyée.

5. Dispositif de renvoi d'une demande de protocole de transfert hypertexte, le dispositif comprenant :
une première unité d'envoi (400) configurée pour envoyer une demande de protocole de transfert hypertexte, HTTP, à un serveur, la demande HTTP comprenant des données représentant une opération effectuée par un utilisateur sur une première page Web ;
une première unité d'enregistrement (401) configurée pour enregistrer des informations de la demande HTTP, les informations de la demande HTTP comprenant l'un ou plusieurs : d'un procédé de demande, d'une adresse de localisateur de ressource uniforme ou d'une version de protocole HTTP ;
une seconde unité d'enregistrement configurée pour enregistrer des demandes HTTP pour lesquelles les informations de réponse retournées par le serveur et indiquant que la demande HTTP a été envoyée avec succès ne sont pas reçues, l'enregistrement des demandes HTTP comprenant :
lorsque le terminal client envoie une demande HTTP, l'enregistrement de la demande HTTP dans une réserve de cache de demande HTTP ; et
la suppression de la demande HTTP de la réserve de cache de demande HTTP lorsque les informations de réponse retournées par le serveur et indiquant que la demande HTTP a été envoyée avec succès sont reçues ;
une unité d'acquisition (402) configurée pour :
lorsque la redirection de la première page Web à une seconde page Web doit se produire, déterminer si la réserve de cache de demande HTTP inclut une demande HTTP qui n'a pas réussi à être envoyée quand la première page Web était ouverte sur le terminal client ; et
s'il est déterminé que la réserve de cache de demande HTTP inclut une demande HTTP qui n'a pas réussi à être envoyée quand le premier état de page Web était ouvert sur le terminal client, identifier des informations enregistrées de la demande HTTP qui n'a pas réussi à être envoyée ;
une unité de transfert (403) configurée pour transférer, vers la seconde page Web, les informations enregistrées identifiées de la demande HTTP qui n'a pas réussi à être envoyée ; et
une seconde unité d'envoi (404) configurée pour, après la redirection vers la seconde page Web, renvoyer la demande HTTP qui n'a pas réussi à être envoyée en fonction des informations enregistrées identifiées de la demande HTTP qui n'a pas réussi à être envoyée.

6. Dispositif de renvoi d'une demande de protocole de transfert hypertexte selon la revendication 4 ou la revendication 5, dans lequel l'unité de transfert comprend :
une sous-unité d'écriture configurée pour écrire les informations enregistrées identifiées de la demande HTTP qui n'a pas réussi à être envoyée dans un nom de fenêtre correspondant à la seconde page Web.
